# EUROPÄISCHE PATENTSCHRIFT

(11) **EP 0 939 020 B1**
(45) Veröffentlichungstag und Bekanntmachung des Hinweises auf die Patenterteilung: **21.11.2001**
(21) Anmeldenummer: 99103425.7
(22) Anmeldetag: 23.02.1999
(51) Int. Cl.: B62D 1/18

(54) **Teleskopierbare Lenksäule für Kraftfahrzeuge**
Telescopable steering column for motor vehicles
Colonne de direction télescopique pour véhicules à moteur

(30) Priorität: 25.02.1998 DE 19807666
(43) Veröffentlichungstag der Anmeldung: 01.09.1999
(73) Patentinhaber: NACAM Deutschland GmbH, 49448 Lemförde (DE)
(72) Erfinder: Baumann, Janet, 49457 Drebber/Cornau (DE)

(56) Entgegenhaltungen:
- WO-A-95/34458
- DE-A- 4 013 810
- FR-A- 2 741 317
- GB-A- 2 256 027
- US-A- 3 665 778
- US-A- 4 504 164
- US-A- 4 911 034

## Beschreibung

Die Erfindung betrifft eine teleskopierbare Lenksäule für Kraftfahrzeuge nach dem Oberbegriff der unabhängigen Patentansprüche.

Lenksäulen sind in unterschiedlichen Bauarten bekannt. Insbesondere ein- oder mehrfach teleskopierbare Lenksäulen sind von Vorteil, da der Fahrer das Lenkrad entsprechend seiner Körpergröße im Fahrzeug positionieren kann, sodaß stets eine bequeme, ergonomisch günstige Körperhaltung erreichbar ist.
Bei derartigen Lenksäulen muß einerseits gewährleistet werden, daß bei einem Unfall das Lenkrad in axialer Richtung ausweichen kann, um schwerwiegende Verletzungen des Fahrzeugführers zu verhindern, andererseits muß während des Teleskopiervorganges eine axiale Wegbegrenzung vorgesehen werden.
Aus der DE 40 13 810 A1 geht beispielsweise eine teleskopierbare Lenksäule für Kraftfahrzeuge mit einer Lenkwelle hervor, deren zumindest bereichsweise axiale Verzahnung in eine komplementäre Verzahnung eines Aufhahmeteiles eingreift, das die Lenkwelle aufnimmt. Ein Sicherungselement weist hakenförmige Klauen auf und bildet in wenigstens einer Bewegungsrichtung eine axiale Wegbegrenzung der Lenkwelle.

Der Erfindung liegt die technische Problemstellung zugrunde, eine teleskopierbare Lenksäule dahingehend weiter zu entwickeln, daß mit einfachen und kostengünstigen Mitteln sowohl die Teleskopierbarkeit gewährleistet ist, als auch eine sinnvolle Axialwegbegrenzung erreicht werden kann.

Gelöst wird diese Problemstellung mit den Merkmalen der Patentansprüche 1 und 2. Danach weist eine teleskopierbare Lenksäule für Kraftfahrzeuge zunächst eine Lenkwelle auf, die zumindest bereichsweise mit einer axialen, vorzugsweise kunststoffbeschichteten Verzahnung ausgestattet ist. Diese Verzahnung am Außenumfang der Lenkwelle greift in eine komplementäre Verzahnung des die Lenkwelle aufnehmenden und führenden Mantelrohres ein. Das Mantelrohr ist in an sich bekannter Weise über Lagerelemente in einem Gehäuse der Lenksäule aufgenommen.
Erfindungsgemäß ist zwischen der Lenkwelle und dem Mantelrohr wenigstens ein Sicherungselement eingesetzt, das einerseits mit wenigstens einer hakenförmigen Klaue in eine Ausnehmung am Außenumfang des Mantelrohres eingreift und sich andererseits über einen radial gerichteten Bund an oder in dem Endabschnitt des Mantelrohres abstützt. Der radiale Bund greift dabei entweder in eine im Innern des Endabschnitts des Mantelrohres ausgebildete Ausnehmung ein oder stützt sich gegen das Ende des Mantelrohres ab. Indem das Sicherungselement in einen begrenzten zylindrischen Bereich der Lenkwelle mit einem gegenüber dem Außendurchmesser der Verzahnung geringeren Durchmesser eingebracht ist, bildet der radiale Bund zugleich einen Axialanschlag als axiale Wegbegrenzung der Lenkwelle in wenigstens einer Richtung.

Weitere sinnvolle und vorteilhafte Ausgestaltungen der Erfindung sind Gegenstand der Unteransprüche.

So kann eine erfindungsgemäße, teleskopierbare Lenksäule ein Sicherungselement mit mehreren Klauen aufweisen. Diese können um den Umfang des Sicherungselementes verteilt und / oder axial beziehungsweise radial versetzt zueinander angeordnet sein. Vorteilhafter Weise kann das Sicherungselement ein einstückig ausgeführtes Formteil sein, an dem mehrere, hakenförmige Klauen angeformt sind, die in einen zylindrischen Bereich mit einem am Außenumfang des Mantelrohres anliegenden Innenmantel übergehen, wobei anderenends an dem zylindrischen Bereich ebenfalls mehrere Klauen angeformt sein können, die jeweils aus einem bogenförmigen Bereich bestehen, der seinerseits in einen axial verlaufenden Bereich übergeht, dessen Endstück jeweils einen radialen Bund bildet.

An dem begrenzten zylindrischen Bereich liegt das Sicherungselement gleitend an. Die Gleitverbindung ist für die Verschiebbarkeit des Lenkwellenteiles notwendig.

Dabei kann gemäß einer weiteren Ausgestaltung der Erfindung der Bereich mit dem zylindrischen Außendurchmesser zwischen zwei mit einer axialen Verzahnung versehenen Bereichen der Lenkwelle angeordnet sein, wobei in einem der Verzahnungsbereiche eine der Anzahl der Klauen entsprechende Anzahl Führungsbahnen eingearbeitet sind, in denen die komplementären axialen Bereiche des Sicherungselementes geführt werden können. Besonders vorteilhaft ist es, das Sicherungselement beiderseits mit drei um 120° zueinander versetzt angeordneten Klauen zu versehen. Es ergibt sich somit eine symmetrische Anordnung der Klauen.
Das Sicherungselement sollte erfindungsgemäß aus einem elastischen Werkstoff, wie beispielsweise Kunststoff oder Metall bestehen. Die Elastizität ist deshalb notwendig, um eine radiale Abstützung des Mantelrohres relativ zur Lenkwelle zu erreichen. Dadurch wird ein Spiel- und Toleranzausgleich zwischen den Bauteilen erreicht.
Fertigungstechnisch einfach und deshalb kostengünstig ist es, die Ausnehmungen im Mantelrohr als umlaufende Nuten auszuführen.

Ein Ausführungsbeispiel der Erfindung wird nachstehend unter Bezugnahme auf die Zeichnung näher erläutert. Es zeigen:
- Figur 1:: eine ausschnittsweise Schnittdarstellung einer erfindungsgemäßen teleskopierbaren Lenksäule,
- Figur 2:: eine schematische Darstellung eines erfindungsgemäßen Sicherungselementes,
- Figur 3:: eine ausschnittsweise Schnittdarstellung einer erfindungsgemäßen teleskopierbaren Lenksäule mit einem anderen erfindungsgemäßen Sicherungselement
und
- Figur 4:: eine schematische Darstellung eines erfindungsgemäßen Sicherungselementes nach Figur 3.

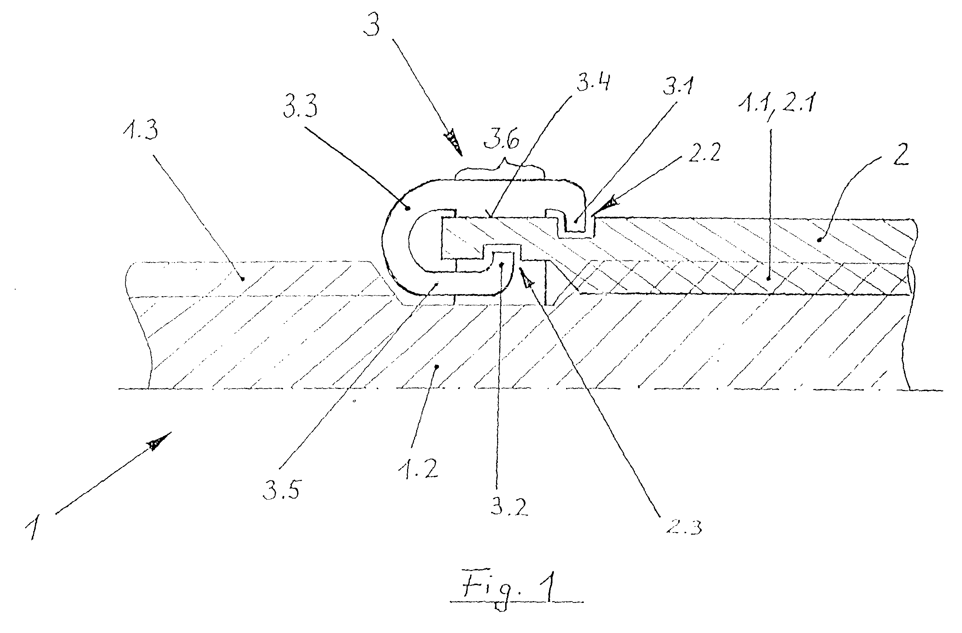

Aus der Figur 1 geht eine ausschnittsweise Schnittdarstellung einer bevorzugten Ausführungsform einer erfindungsgemäßen teleskopierbaren Lenksäule hervor. Diese teleskopierbare Lenksäule für Kraftfahrzeuge besteht aus einer Lenkwelle 1, die zwei mit einer axialen Verzahnung 1.1 und 1.3 versehene Bereiche aufweist. Zwischen diesen Bereichen ist ein Bereich 1.2 mit einem zylindrischen Außendurchmesser eingebracht. Die axial verlaufende, kunststoffbeschichtete Verzahnung 1.1 der Lenkwelle 1 greift in eine komplementäre Verzahnung 2.1 des die Lenkwelle 1 aufnehmenden und führenden Mantelrohres 2 ein.
Ein aus Kunststoff oder elastischem Werkstoff hergestelltes Sicherungselement 3 ist einerseits mit drei um 120° versetzt angeordneten, hakenförmigen Klauen 3.1 ausgestattet, die in eine als umlaufende Nut gestaltete Ausnehmung 2.2 des Mantelrohres 2 eingreifen.

Das Sicherungselement 3 ist ein einstückig ausgeführtes Formteil, dessen hakenförmige Klauen 3.1 in einen zylindrischen Bereich 3.6 mit einem am Außenumfang des Mantelrohres 2 anliegenden Innenmantel 3.4 übergehen, wobei andererseits an dem zylindrischen Bereich 3.6 ebenfalls drei um 120° versetzt angeordnete Klauen angeformt sind, die jeweils aus einem bogenförmigen Bereich 3.3 bestehen, der seinerseits in einen axial verlaufenden Bereich 3.5 übergeht, dessen Endstück je einen radialen Bund 3.2 bildet. Dieser radial gerichtete Bund 3.2 greift bei der Ausführung gemäß der Figur 1 in eine Nut oder Ausnehmung 2.3 im Endabschnitt des Mantelrohres 2 ein und bildet somit in einer Richtung eine axiale Wegbegrenzung der Lenkwelle 1. Die axiale Wegbegrenzung der Lenkwelle 1 wird dadurch erreicht, daß die Verzahnung 1.1 der Lenkwelle 1 an dem radialen Bund 3.2 zur Anlage kommt.

Der Bereich 1.2 mit dem zylindrischen Außendurchmesser ist zwischen den zwei mit einer axialen Verzahnung versehenen Bereichen 1.1 und I 3 der Lenkwelle 1 eingebracht, wobei in dem Verzahnungsbereich 1.3 eine der Anzahl der axialen Bereiche 3.5 entsprechende Anzahl Führungsbahnen (in Figur 1 nicht dargestellt) eingearbeitet sind, in denen diese axialen Bereiche 3.5 des Sicherungselementes 3 geführt sind.

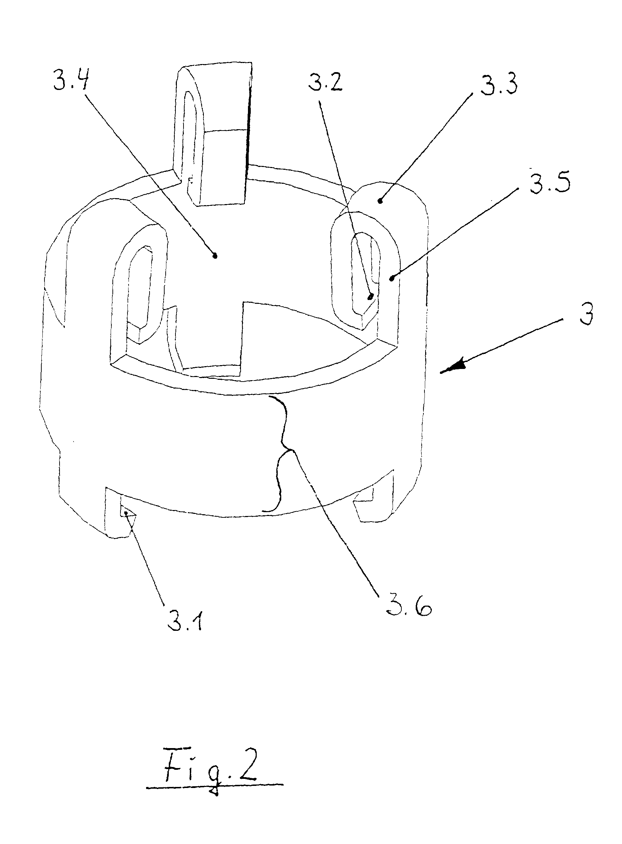

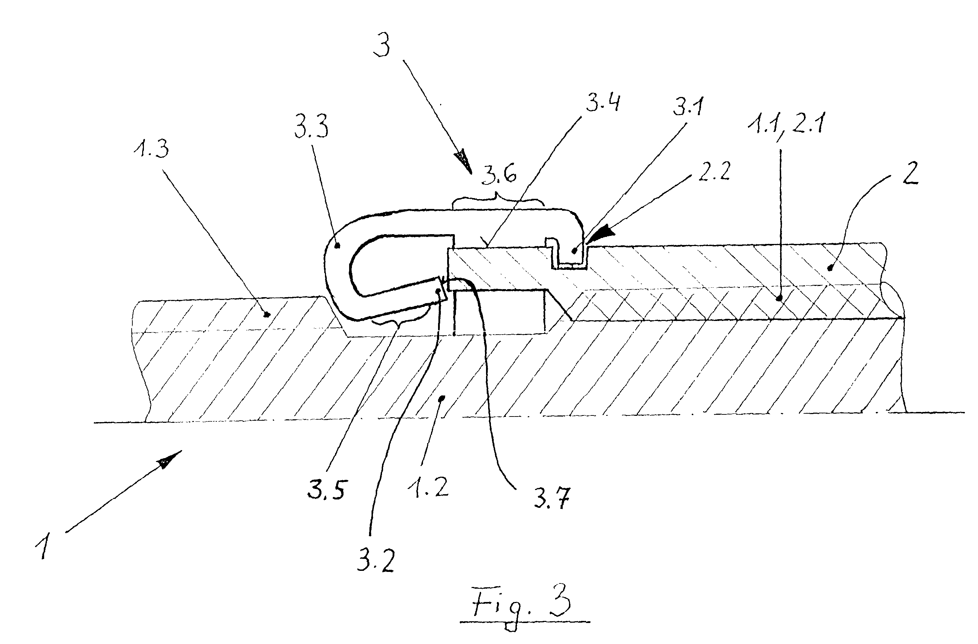

In der Figur 2 ist das zuvor beschriebene Sicherungselement 3 als Einzelteil dargestellt.

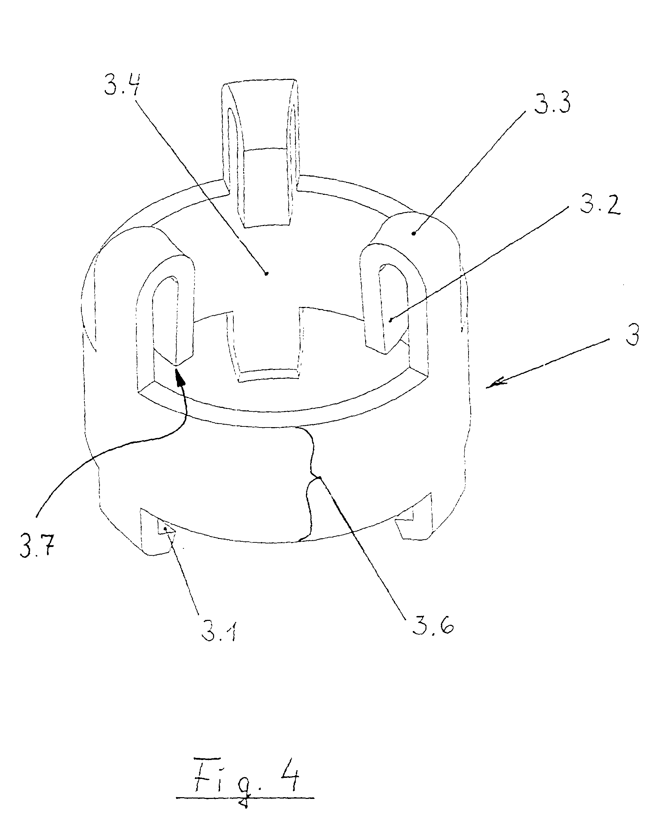

Aus der Figur 3 geht eine ausschnittsweise Schnittdarstellung einer weiteren bevorzugten Ausführungsform einer erfindungsgemäßen teleskopierbaren Lenksäule hervor.
Diese teleskopierbare Lenksäule für Kraftfahrzeuge besteht aus einer Lenkwelle 1, die zwei mit einer axialen Verzahnung 1.1 und 1.3 versehene Bereiche aufweist. Zwischen diesen Bereichen ist ein Bereich 1.2 mit einem zylindrischen Außendurchmesser eingebracht.
Die axial verlaufende, kunststoffbeschichtete Verzahnung 1.1 der Lenkwelle 1 greift in eine komplementäre Verzahnung 2.1 des die Lenkwelle 1 aufnehmenden und führenden Mantelrohres 2 ein.
Ein aus Kunststoff oder elastischem Werkstoff hergestelltes Sicherungselement 3 ist einerseits mit drei um 120° versetzt angeordneten, hakenförmigen Klauen 3,1 ausgestattet, die in eine als umlaufende Nut gestaltete Ausnehmung 2.2 des Mantelrohres 2 eingreifen.

Das Sicherungselement 3 ist ein einstückig ausgeführtes Formteil, dessen hakenförmige Klauen 3.1 in einen zylindrischen Bereich 3.6 mit einem am Außenumfang des Mantelrohres 2 anliegenden Innenmantel 3.4 übergehen, wobei andererseits an dem zylindrischen Bereich 3.6 ebenfalls drei um 120° versetzt angeordnete Klauen angeformt sind, die jeweils aus einem bogenförmigen Bereich 3.3 bestehen, der seinerseits in einen annähernd axialen Bereich 3.5 übergeht, dessen Endstück ein radial verlaufender oder annähernd radial gerichteter Bund 3.2. ist.
Dieser radiale oder radial gerichtete Bund 3.2 stützt sich an seinem Ende über eine Stirnfläche 3.7 gegen das Ende des Mantelrohres 2 ab. Die axiale Wegbegrenzung der Lenkwelle 1 wird dadurch erreicht, daß die Verzahnung 1.1 der Lenkwelle 1 an der Stirnfläche 3.7 zur Anlage kommt.

Der Bereich 1.2 mit dem zylindrischen Außendurchmesser ist zwischen den zwei mit einer axialen Verzahnung versehenen Bereichen 1.1 und 1.3 3 der Lenkwelle 1 eingebracht, wobei in dem Verzahnungsbereich 1.3 eine der Anzahl der axial verlaufenden Bereiche 3 5 entsprechende Anzahl Führungsbahnen (in Figur 3 nicht dargestellt) eingearbeitet sind, in denen die axial verlaufenden Bereiche 3.5 des Sicherungselementes 3 geführt sind.

In der Figur 4 ist das zuvor beschriebene Sicherungselement 3 als Einzelteil dargestellt.

## Patentansprüche

1. Teleskopierbare Lenksäule für Kraftfahrzeuge mit einer Lenkwelle (1), deren zurnindest bereichsweise axiale, Verzahnung (1.1) in eine komplementäre Verzahnung (2.1) des die Lenkwelle aufnehmenden und führenden Mantelrohres (2) eingreift, das über Lagerelemente in einem Gehäuse der Lenksäule aufgenommen ist, wobei ein hakenförmige Klauen (3.1) aufweisendes Sicherungselement (3) in wenigstens einer Bewegungsrichtung eine axiale Wegbegrenzung der Lenkwelle (1) bildet, indem es in einen begrenzten zylindrischen Bereich (1.2) der Lenkwelle (1) mit einem gegenüber dem Außendurchmesser der Verzahnung (1.1) geringeren Durchmesser eingebracht ist, **dadurch gekennzeichnet, daß** das Sicherungselement (3) einerseits mit wenigstens einer hakenförmigen Klaue (3.1) in eine Ausnehmung (2.2) am Außenumfang des Mantelrohres (2) eingreift und andererseits über einen radialen Bund (3.2) in eine im Inneren des Endabschnitts des Mantelrohres (2) ausgebildete Ausnehmung (2.3) eingreift.

2. Teleskopierbare Lenksäule für Kraftfahrzeuge mit einer Lenkwelle (1), deren zumindest bereichsweise axiale, Verzahnung (1.1) in eine komplementäre Verzahnung (2.1) des die Lenkwelle aufnehmenden und führenden Mantelrohres (2) eingreift, das über Lagerelemente in einem Gehäuse der Lenksäule aufgenommen ist, wobei ein hakenförmige Klauen (3.1) aufweisendes Sicherungselement (3) in wenigstens einer Bewegungsrichtung eine axiale Wegbegrenzung der Lenkwelle (1) bildet, indem es in einen begrenzten zylindrischen Bereich (1.2) der Lenkwelle (1) mit einem gegenüber dem Außendurchmesser der Verzahnung (1.1) geringeren Durchmesser eingebracht ist, **dadurch gekennzeichnet, daß** das Sicherungselement (3) einerseits mit wenigstens einer hakenförmigen Klaue (3.1) in eine Ausnehmung (2.2) am Außenumfang des Mantelrohres (2) eingreift und andererseits mit einem radial gerichteten Bund (3.2) sich gegen das Ende des Mantelrohres (2) abstützt.

3. Teleskopierbare Lenksäule nach Anspruch 1 oder 2, **dadurch gekennzeichnet, daß** das Sicherungselement (3) mehrere, um den Umfang des Sicherungselementes verteilt und / oder axial beziehungsweise radial versetzt zueinander angeordnete hakenförmige Klauen (3.1) aufweist.

4. Teleskopierbare Lenksäule nach den Ansprüchen 1 und 3, **dadurch gekennzeichnet, daß** das Sicherungselement (3) ein einstückig ausgeführtes Formteil ist, dessen hakenförmige Klauen (3.1) in einen zylindrischen Bereich (3.6) mit einem am Außenumfang des Mantelrohres anliegenden Innenmantel (3.4) übergehen, wobei anderenends an dem zylindrischen Bereich (3.6) mehrere Klauen angeformt sind, die jeweils aus einem bogenförmigen Bereich (3.3) bestehen, der seinerseits in einen axial verlaufenden Bereich (3.5) übergeht, dessen Endstück jeweils einen radialen oder radial gerichteten Bund (3.2) bildet.

5. Teleskopierbare Lenksäule nach den Ansprüchen 2 und 3, **dadurch gekennzeichnet, daß** das Sicherungselement (3) ein einstückig ausgeführtes Formteil ist, dessen hakenförmige Klauen (3.1) in einen zylindrischen Bereich (3.6) mit einem am Außenumfang des Mantelrohres anliegenden Innenmantel (3.4) übergehen, wobei anderenends an dem zylindrischen Bereich (3.6) mehrere Klauen angeformt sind, die jeweils aus einem bogenförmigen Bereich (3.3) bestehen, der seinerseits in einen axial verlaufenden Bereich (3.5) übergeht, dessen Endstück eine Stirnfläche (3.7) bildet, an der ein Endabschnitt des Mantelrohres (2) anliegt.

6. Teleskopierbare Lenksäule nach Anspruch 4 oder 5, **dadurch gekennzeichnet, daß** an dem begrenzten zylindrischen Bereich (1.2) der axial verlaufende Bereich (3.5) des Sicherungselementes (3) gleitend anliegt.

7. Teleskopierbare Lenksäule nach Anspruch 6, **dadurch gekennzeichnet, daß** der Bereich (1.2) mit dem zylindrischen Außendurchmesser zwischen zwei mit einer axialen Verzahnung versehenen Bereichen (1.1, 1.3) der Lenkwelle (1) eingebracht ist, wobei in einem Verzahnungsbereich (1.3) eine der Anzahl der axialen Bereiche (3.5) oder der radialen Bünde (3.2) entsprechende Anzahl Führungsbahnen eingearbeitet sind, in denen die axialen Bereiche (3.5) oder die radialen Bünde (3.2) des Sicherungselementes (3) geführt sind.

8. Teleskopierbare Lenksäule nach Anspruch 7, **dadurch gekennzeichnet, daß** das Sicherungselement (3) zur einen Seite drei um 120° zueinander versetzt angeordnete hakenförmige Klauen (3.1) und zur anderen Seite drei um 120° zueinander versetzt angeordnete Bunde (3.2) aufweist.

9. Teleskopierbare Lenksäule nach einem der vorhergehenden Ansprüche, **dadurch gekennzeichnet, daß** das Sicherungselement (3) aus einem elastischen Werkstoff besteht.

10. Teleskopierbare Lenksäule nach Anspruch 9, **dadurch gekennzeichnet, daß** das Sicherungselement (3) aus Kunststoff besteht.

11. Teleskopierbare Lenksäule nach einem der vorhergehenden Ansprüche, **dadurch gekennzeichnet, daß** die Ausnehmungen (2.2, 2.3) umlaufende Nuten sind.

## Claims

1. Telescopic steering column for motor vehicles with a steering shaft (1), whose tooth system (1.1), which is axial at least in regions, meshes with a complementary tooth system (2.1) of the outer tube (2), which holds and guides the steering shaft and is held via bearing elements in a housing of the steering column, wherein a securing element (3) comprising hook-shaped claws (3.1) forms an axial travel limit for the steering shaft (1) in at least one direction of movement through being introduced into a limited cylindrical region (1.2) of the steering shaft (1) with a diameter which is smaller than the outer diameter of the tooth system (1.1), **characterised in that** the securing element (3) engages on one side by way of at least one hook-shaped claw (3.1) in a recess (2.2) at the outer circumference of the outer tube (2) and on the other via a radial collar (3.2) in a recess (2.3) formed inside the end portion of the outer tube (2).

2. Telescopic steering column for motor vehicles with a steering shaft (1), whose tooth system (1), which is axial at least in regions, meshes with a complementary tooth system (2.1) of the outer tube (2), which holds and guides the steering shaft and is held via bearing elements in a housing of the steering column, wherein a securing element (3) comprising hook-shaped claws (3.1) forms an axial travel limit for the steering shaft (1) in at least one direction of movement through being introduced into a limited cylindrical region (1.2) of the steering shaft (1) with a diameter which is smaller than the outer diameter of the tooth system (1.1), **characterised in that** the securing element (3) engages on one side by way of at least one hook-shaped claw (3.1) in a recess (2.2) at the outer circumference of the outer tube (2) and is supported on the other by way of a radially directed collar (3.2) against the end of the outer tube (2).

3. Telescopic steering column according to Claim 1 or 2, **characterised in that** the securing element (3) comprises a plurality of hook-shaped claws (3.1) distributed about the circumference of the securing element and/or mutually staggered axially or radially.

4. Telescopic steering column according to Claims 1 and 2, **characterised in that** the securing element (3) is a one-piece moulded part, the hook-shaped claws (3.1) of which pass into a cylindrical region (3.6) with an inner tube (3.4) lying against the outer circumference of the outer tube, wherein a plurality of claws are moulded onto the cylindrical region (3.6) at the other end, these each consisting of a curved region (3.3), which in turn passes into an axially extending region (3.5), the end piece of which in each case forms a radial or radially directed collar (3.2).

5. Telescopic steering column according to Claims 2 and 3, **characterised in that** the securing element (3) is a one-piece moulded part, the hook-shaped claws (3.1) of which pass into a cylindrical region (3.6) with an inner tube (3.4) lying against the outer circumference of the outer tube, wherein a plurality of claws are moulded onto the cylindrical region (3.6) at the other end, these each consisting of a curved region (3.3), which in turn passes into an axially extending region (3.5), the end piece of which forms a front face (3.7), against which an end portion of the outer tube (2) lies.

6. Telescopic steering column according to Claim 4 or 5, **characterised in that** the axially extending region (3.5) of the securing element (3) lies in a sliding fashion against the limited cylindrical region (1.2).

7. Telescopic steering column according to Claim 6, **characterised in that** the region (1.2) with the cylindrical outer diameter is introduced between two regions (1.1, 1.3), provided with an axial tooth system, of the steering shaft (1), wherein a number of guideways corresponding to the number of axial regions (3.5) or radial collars (3.2) are worked into one tooth system region (1.3), in which guideways the axial regions (3.5) or the radial collars (3.2) of the securing element (3) are guided.

8. Telescopic steering column according to Claim 7, **characterised in that** the securing element (3) comprises three hook-shaped claws (3.1), mutually staggered by 120°, on one side and three collars (3.2), mutually staggered by 120°, on the other side.

9. Telescopic steering column according to any one of the preceding Claims, **characterised in that** the securing element (3) consists of an elastic material.

10. Telescopic steering column according to Claim 9, **characterised in that** the securing element (3) consists of a plastics material.

11. Telescopic steering column according to any one of the preceding Claims, **characterised in that** the recesses (2.2, 2.3) are circulating grooves.

## Revendications

1. Colonne de direction télescopique pour véhicules à moteur, comprenant un arbre de direction (1), dont une denture (1.1) au moins axiale par segments s'engage dans une denture complémentaire (2.1) du tube de protection (2) recevant et guidant l'arbre de direction, ledit tube étant reçu via des éléments de palier dans un boîtier de la colonne de direction, un élément de blocage (3) qui présente des griffes en forme de crochets (3.1) assurant dans au moins un sens de déplacement une limitation de course axiale de l'arbre de direction (1), en étant inséré dans une zone cylindrique limitée (1.2) de l'arbre de direction (1) ayant un diamètre faible par rapport au diamètre extérieur de la denture (1.1), **caractérisée en ce que** l'élément de blocage (3) s'engage, d'une part, avec au moins une griffe en forme de crochet (3.1) dans une cavité (2.2) ménagée sur la périphérie extérieure du tube de protection (2) et s'engage, d'autre part, par l'intermédiaire d'un collet radial (3.2) dans une cavité (2.3) formée à l'intérieur de la section d'extrémité du tube de protection (2).

2. Colonne de direction télescopique pour véhicules à moteur, comprenant un arbre de direction (1), dont la denture (1.1) au moins axiale par segments s'engage dans une denture complémentaire (2.1) du tube de protection (2) recevant et guidant l'arbre de direction, ledit tube étant reçu via des éléments de palier dans un boîtier de la colonne de direction, un élément de blocage (3) qui présente des griffes en forme de crochets (3.1) assurant dans au moins un sens de déplacement une limitation de course axiale de l'arbre de direction (1), en étant inséré dans une zone cylindrique limitée (1.2) de l'arbre de direction (1) ayant un diamètre faible par rapport au diamètre extérieur de la denture (1.1), **caractérisée en ce que** l'élément de blocage (3) s'engage, d'une part, par au moins une griffe en forme de crochet (3.1) dans une cavité (2.2) ménagée sur la périphérie extérieure du tube de protection (2) et s'appuie, d'autre part, par un collet dirigé radialement (3.2) contre l'extrémité du tube de protection (2).

3. Colonne de direction télescopique selon la revendication 1 ou 2, **caractérisée en ce que** l'élément de blocage (3) présente plusieurs griffes en forme de crochets (3.1) réparties sur la périphérie de l'élément de blocage et/ou décalées axialement ou radialement l'une par rapport à l'autre.

4. Colonne de direction télescopique selon les revendications 1 et 3, **caractérisée en ce que** l'élément de blocage (3) est une pièce moulée réalisée d'un seul tenant, dont les griffes en forme de crochets (3.1) se fondent dans une zone cylindrique (3.6) avec une gaine interne (3.4) s'appliquant sur la périphérie extérieure du tube de protection, plusieurs griffes étant formées à l'autre extrémité dans la zone cylindrique (3.6), lesdites griffes étant constituées d'une zone arquée (3.3), qui se fond pour sa part dans une zone s'étendant axialement (3.5), dont la pièce d'extrémité forme respectivement un collet radial ou orienté radialement (3.2).

5. Colonne de direction télescopique selon les revendications 2 et 3, **caractérisée en ce que** l'élément de blocage (3) est une pièce moulée réalisée d'un seul tenant, dont les griffes en forme de crochets (3.1) se fondent dans une zone cylindrique (3.6) avec une gaine interne (3.4) s'appliquant sur la périphérie extérieure du tube de protection, plusieurs griffes étant formées à l'autre extrémité dans la zone cylindrique (3.6), lesdites griffes étant constituées d'une zone arquée (3.3), qui se fond pour sa part dans une zone s'étendant axialement (3.5) dont la pièce d'extrémité forme une surface frontale (3.7), sur laquelle une section d'extrémité du tube de protection (2) s'applique.

6. Colonne de direction télescopique selon la revendication 4 ou 5, **caractérisée en ce que** la zone (3.5) s'étendant axialement de l'élément de blocage (3) s'applique à glissement sur la zone cylindrique limitée (1.2).

7. Colonne de direction télescopique selon la revendication 6, **caractérisée en ce que** la zone (1.2) de diamètre extérieur cylindrique est insérée entre deux zones (1.1, 1.3) de l'arbre de direction (1) pourvues d'une denture axiale, un nombre de voies de guidage correspondant au nombre des zones axiales (3.5) ou des collets radiaux (3.2) étant ménagés dans une zone dentée (1.3), voies dans lesquelles les zones axiales (3.5) ou les collets radiaux (3.2) de l'élément de blocage (3) sont guidés.

8. Colonne de direction télescopique selon la revendication 7, **caractérisée en ce que** l'élément de blocage (3) présente sur un côté trois griffes en forme de crochets (3.1) décalées de 120° l'une de l'autre et, sur l'autre côté, trois collets (3.2) décalés l'un de l'autre de 120°.

9. Colonne de direction télescopique selon l'une quelconque des revendications précédentes, **caractérisée en ce que** l'élément de blocage (3) est constitué d'un matériau élastique.

10. Colonne de direction télescopique selon la revendication 9, **caractérisée en ce que** l'élément de blocage (3) est constitué d'une matière plastique.

11. Colonne de direction télescopique selon l'une quelconque des revendications précédentes, **caractérisée en ce que** les cavités (2.2, 2.3) sont des encoches périphériques.
